# EUROPEAN PATENT APPLICATION

(11) **EP 1 923 890 A2**
(43) Date of publication of application: **21.05.2008**
(21) Application number: 07012584.4
(22) Date of filing: 27.06.2007
(51) Int. Cl.: G11B 33/02

(54) **Releasing device for releasing hard disk drive**

(30) Priority: 15.11.2006 CN 200610160351
(71) Applicant: Delta Electronics, Inc., Taoyuan Sien 333, Taiwan (CN)
(72) Inventor: Hsu, Mei-Man, Cianjhen District Kaohsiung City 806 (TW)
(74) Representative: Spitz, Volker

(57) **Abstract**

A releasing device for releasing the hard disk drive (18) is provided. The releasing device includes a housing (10, 20), a first releasing component (12, 22), a second releasing component (14, 24) and a third releasing component (16, 26). The housing (10, 20) is used to contain the hard disk drive (18) therein. The first releasing component (12, 22) is mounted on the housing (10, 20) and having a first front end (122, 222) and a first back end (124, 224). The second releasing component (14, 24) has a second front end (142, 242), a second back end (144, 244) and a fixed point (146, 246) fixed to the housing (10, 20), wherein the second front end (142, 242) is connected to the first back end (124, 224) of the first releasing component (12, 22), the fixed point (146, 246) mounted between the second front end (142, 242) and the second back end (144, 244) for serving as a pivoting center, and the second front end (142, 242) revolves around the pivoting center while the first releasing component (12, 22) is moved. The third releasing component (16, 26) has a third front end (162, 262) and a third back end (164, 264), wherein the third front end (162, 262) is connected to the second back end (144, 244) of the second releasing component (14, 24), and the third back end (164, 264) of the third releasing component (16, 26) pushes the hard disk drive (18) for releasing the hard disk drive (18) from the housing (10, 20) while the second releasing component (14, 24) is pivoted.

## Description

The present invention relates to a releasing device for releasing a hard disk drive, and more particularly to a releasing device configured in a vehicle for releasing a hard disk drive therein.

As the modem people pay more attention to their life quality, they spend more time on the holiday tour. In other words, people will take more time on their automobiles during their journey. Hence, the necessities for the entertainment equipments disposed on the automobiles, including video devices, digital camera, DVD players, video games and GPS devices, might highly increase.

In the current commercial automobile market, the multi-media equipments become more popular and thus the necessity for mounting the hard disk drive (HDD) module to support the mentioned device becomes imperative. However, if such expensive HDD module equipments directly mounted on the automobiles, drivers might be worry about the piracy. Further, the application of the HDD module might be limited to only support those entertainment equipments on the automobiles.

From the above description, it is known that how to provide a releasing device for releasing the HDD module has become a major problem waited to be solved. In order to overcome the drawbacks in the prior art, an improved input component is provided. The particular design in the present invention not only solves the problems described above, but also is easy to be implemented. Thus, the invention has the utility for the industry.

In accordance with one aspect of the present invention, a releasing device for releasing a hard disk drive is provided. The releasing device comprises a housing, a first releasing component, a control component, a second releasing component and a third releasing component. The housing is used to contain the hard disk drive therein. The first releasing component is mounted on the housing and has a first front end and a first back end. The control component is connected to the first front end of the first releasing component for controlling whether an external force is to be applied to the first releasing component. The second releasing component has a second front end, a second back end and a fixed point fixed to the housing, wherein the second front end is connected to the first back end of the first releasing component, the fixed point is mounted between the second front end and the second back end for serving as a pivoting center, and the second front end revolves around the pivoting center while the first releasing component is moved. The third releasing component has a third front end and a third back end, wherein the third front end is connected to the second back end of the second releasing component, and the third back end of the third releasing component pushes the hard disk drive for releasing the hard disk drive from the housing while the second releasing component is pivoted.

Preferably, the housing has a lateral side and the first releasing component is mounted on the lateral side of the housing.

Preferably, the control component comprises a pivotable portion, the pivotable portion in a first position enables the application of the external force to the first releasing component and the pivotable portion in a second position disables the application of the external force to the first releasing component.

Preferably, the housing has an opening on a side thereof.

Preferably, the third back end of the third releasing component comprises a protruding portion passing through the opening.

Preferably, the first releasing component is a pushing bar.

Preferably, the control component is a pressing button.

Preferably, the second releasing component is a revolving bar.

Preferably, the third releasing component is a pushing plate.

Preferably, the releasing device for releasing the hard disk drive is configured in a vehicle.

In accordance with another aspect of the present invention, a releasing device for releasing the hard disk drive is provided. The releasing device comprises a housing, a first releasing component, a second releasing component and a third releasing component. The housing is used to contain the hard disk drive therein. The first releasing component is mounted on the housing. The second releasing component has a first end, a second end and a fixed point, wherein the first end is connected to the first releasing component, and the second releasing component moves around the fixed point in response to a movement of the first releasing component. The third releasing component has a third end connected to the second end of the second releasing component, wherein the third releasing component pushes the hard disk drive for releasing the hard disk drive from the housing while the second releasing component is moved.

Preferably, the third releasing component further comprises a fourth end to push the hard disk drive while the second released component is moved for releasing the hard disk drive from the housing.

Preferably, the housing has a lateral side and the first releasing component is mounted on the lateral side of the housing.

Preferably, the housing has an opening on a side thereof.

Preferably, the fourth end of the third releasing component comprises a protruding portion passing through the opening.

Preferably, the first releasing component is a pushing bar.

Preferably, the second releasing component is a revolving bar.

Preferably, the third releasing component is a pushing plate.

Preferably, the hard disk drive is configured in a vehicle.

The foregoing and other features and advantages of the present invention will be more clearly understood through the following descriptions with reference to the drawings, wherein:

Fig. 1 is a structural diagram of the respective components of the releasing device before they are packaged according to a first embodiment of the present invention;

Fig. 2(a) is a schematic diagram of the releasing device containing a hard disk drive therein after the components in Fig. 1 are packaged;

Fig. 2(b) is another schematic diagram of the releasing device after the hard disk drive in Fig. 2(a) is released from the housing;

Fig. 3 is a structural diagram of the respondent components of the releasing device before they are packaged according to a second embodiment of the present invention; and

Fig. 4(a) is a schematic diagram of the releasing device containing a hard disk drive therein after the components in Fig. 3 are packaged;

Fig. 4(b) is another schematic diagram of the releasing device after the hard disk drive in Fig. 4(a) is released from the housing;

Fig. 5 is an appearance diagram of the releasing device for releasing the hard disk drive according to the present invention.

The present invention will now be described more specifically with reference to the following embodiments. It is to be noted that the following descriptions of preferred embodiments of this invention are presented herein for the purposes of illustration and description only; it is not intended to be exhaustive or to be limited to the precise form disclosed.

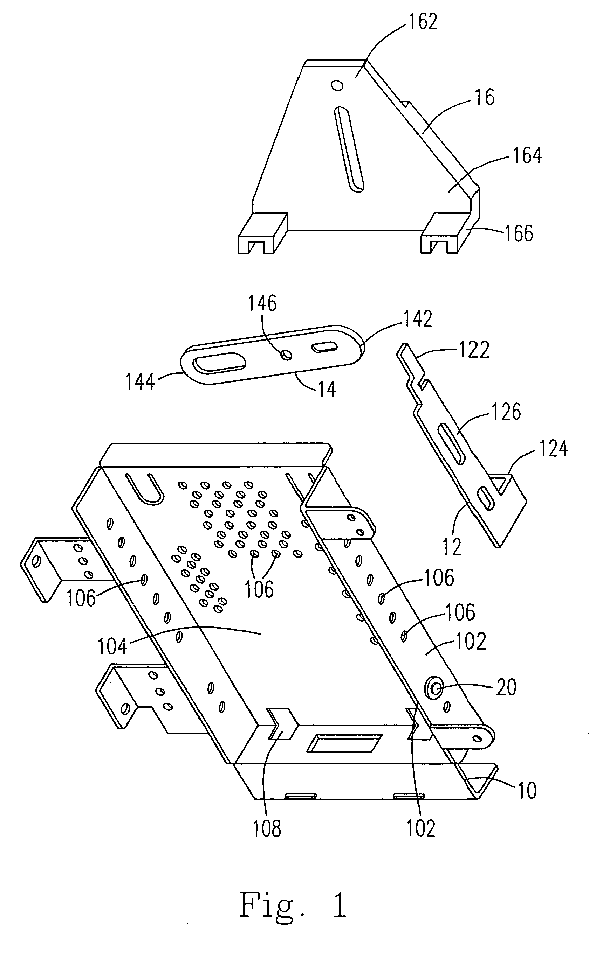

Please refer to Fig. 1, which depicts a structural diagram of the respective components of the releasing device before they are packaged according to a first embodiment of the present invention. The present releasing device includes a housing **10**, a first releasing component **12**, a second releasing component 14 and a third releasing component **16**. A portable hard disk drive (not shown in Fig. 1) inserts into the housing **10** capable of supporting and immobilizing the hard disk drive therein. The first releasing component **12** is mounted onto the housing **10** and has a first front end **122** and a first back end **124**. The second releasing component **14** has a second front end **142**, a second back end **144** and a fixed point **146** fixed to the housing **10**. The second front end **142** of the second releasing component **14** is connected to the first back end **124** of the first releasing component **12** and the second releasing component **14** revolves around the fixed point **146** through the connection to the first releasing component **12**. The third releasing component 16 has a third front end **162** and a third back end **164**. The third front end **162** of the third releasing component **16** is connected to the second back end **144** of the second releasing component **14** and the third back end **164** of the third releasing component **16** pushes the hard disk drive contained in the housing **10** through the connection to the second releasing component **14**.

Please refer to Fig. 1 again, the housing **10** has a lateral side **102** and a bottom side **104** where there are a plurality of holes **106** mounted thereon. The first releasing component **12** has a hollow portion **126** that is fixed on one of the plurality of holes **106** of the lateral side **102** of the housing **10** with more than one buckle **20**; thus the hollow portion **126** of the first releasing component **12** is capable of sliding along the lateral side **102** of the housing **10** by means of the buckle **20** fixed to the hollow portion **126**. The first back end **124** of the first releasing component **12** extends to the bottom side **104** of the housing **10** and is perpendicular to the lateral side **102**. The second front end **142** of the second releasing component **14** is connected to the first back end **124** of the first releasing component **12**. The second releasing component **14** has a fixed point **146** that mounted between the second front end **142** and the second back end **144**. The fixed point **146** is fixed to the bottom side **104** of the housing **10** with the buckle **20** and serves as a pivoting center so that the first releasing component **12** revolves therearound. The third front end **162** of the third releasing component **16** is connected to the second back end **144** of the second releasing component **14**. The housing **10** further comprises two respective openings **108** and the third back end **164** of third releasing component **16** comprises two respective protruding portions 166 passing through the openings **108**.

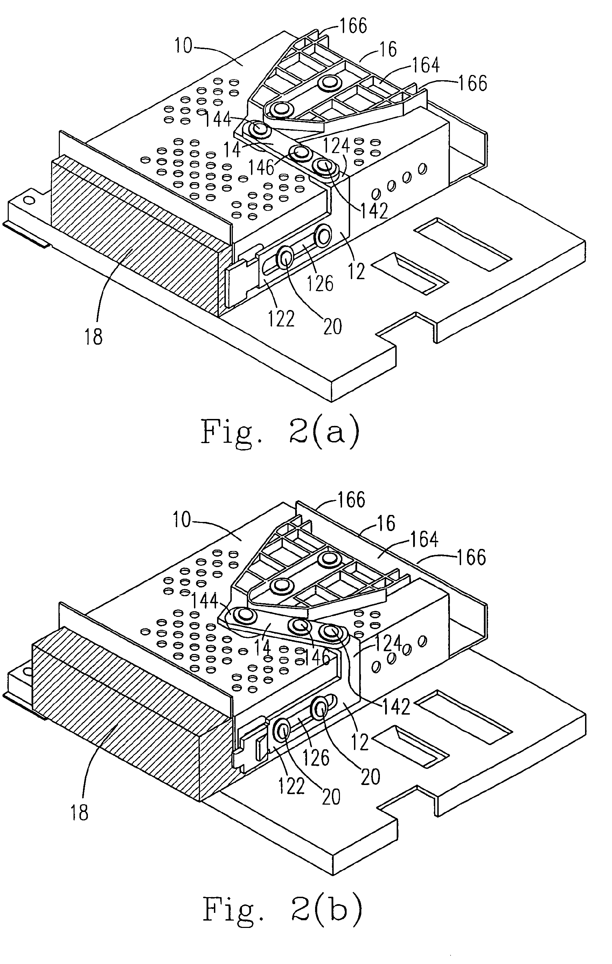

Please refer to Fig. 2(a) and 2(b), which depict structural diagrams after the respective components of the releasing device in Fig. 1 are packaged according to the first embodiment of the present invention. Fig. 2(a) shows a schematic diagram of the releasing device containing a hard disk drive **18** therein after the components in Fig. 1 are packaged. The first releasing component **12** mounted on the housing **10** utilizes the number of the buckle **20** to control the distance that the first releasing component **12** slides on the lateral side **102** of the housing **10**. While the first front end **122** of the first releasing component **12** receives an external force, the first releasing component **12** slides towards the opposite direction of the received external force. Then, the second front end **142** of the second releasing component **14** revolves around the fixed point **146**. Correspondingly, the second back end **144** also revolves around the fixed point **146** in the opposite direction to the second front end **142**. The movement of the second back end **144** drives the third front end **162** of the third releasing component **16** and then the protruding portions **166** of the third back end **164** moves to push out the hard disk drive **18** from the housing **10**. Fig. 2(b) depicts another schematic diagram of the releasing device after the hard disk drive in Fig. 2(a) is released from the housing **10**. Accordingly, the released hard disk drive **18** could be easily accessed.

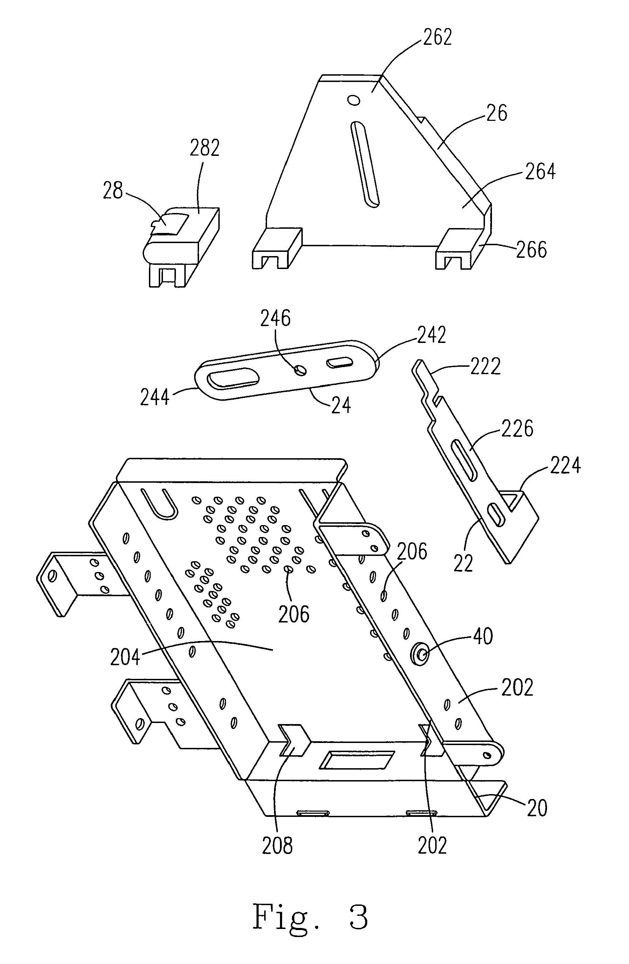

Please refer to Fig. 3, which depicts a structural diagram of the respective components of the releasing device before they are packaged according to a second embodiment of the present invention. The present releasing device for releasing the hard disk drive comprises a housing **20**, a first releasing component **22**, a second releasing component **24**, a third releasing component **26** and a control component **28**. The housing **20** is used to contain a hard disk drive (not shown in Fig. 3) and capable of supporting and immobilizing the hard disk drive therein. The first releasing component **22** is mounted on the housing **20** and has a first front end **222** and a first back end **224**. The control component **28**, such as a pressing button, is connected to the first front end **222** of the first releasing component **22** to control whether an external force is applied to the first releasing component **22**. The second releasing component **24** has a second front end **242**, a second back end **244** and a fixed point **246**, wherein the second front end **242** is connected to the first back end **224** of the first releasing component **22** and the second releasing component **24** revolves around the fixed point **246** that serves as a pivoting center, while the first releasing component **22** is moved. The third releasing component **26** has a third front end **262** and a third back end **264**, wherein the third front end **262** is connected to the second back end **244** of the second releasing component **24**. The third back end **264** of the third releasing component **26** pushes out the hard disk drive from the housing **20** while the second releasing component **24** is pivoted.

Please refer to Fig. 3 again. The housing **20** has a lateral side **202** and a bottom side **204** where there are a plurality of holes **206** disposed thereon. The first releasing component **22** has a hollow portion **226** and the first releasing component **22** is fixed on the lateral side **202** of the housing **20** with more than one buckle **40** immobilized to the hollow portion **226**. Accordingly, the first releasing component **22** is capable of sliding along the lateral side **202** of the housing **20**. The first back end **224** of the first releasing component **22** extends to the bottom side **204** and perpendicular to the lateral side **202** of the housing **20**. The control component **28** comprises a pivoting portion **282** to prevent the hard disk drive from being pushing out from the housing **20** due to the unsuitable external force. Users could revolve the pivoting portion **282** about 90 degrees and then apply an external force to the control component **28**. Subsequently, the first releasing component **22** is moved along the lateral side **202** due to the passing external force from the control component **28**. The second front end **242** of the second releasing component **24** is connected to the first back end **224** of the first releasing component **22**. The second releasing component **24** is fixed on the bottom side **204** of the housing **20** with a buckle **40** immobilized to the fixed point **246** so that the second releasing component **24** revolves around the fixed point **246**. The third front end **262** of the third releasing component **26** is connected to the second back end **244** of the second releasing component **24**. The housing **20** further comprises two respective openings **208** and the third back end **264** of the third releasing component **26** comprises two respective protruding portions **266** passing through the opening **208**.

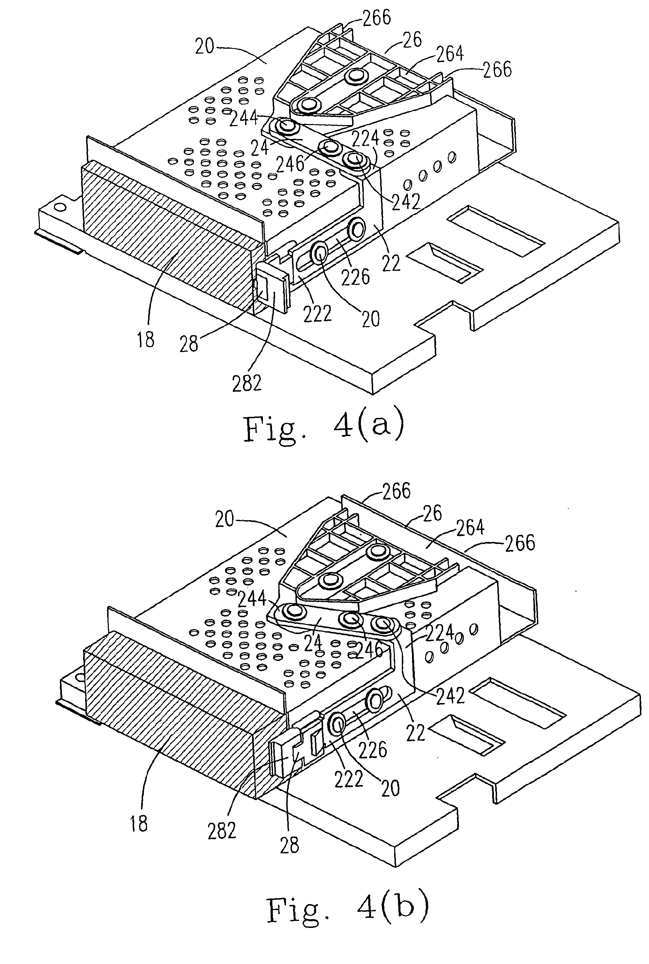

Please refer to Fig. 4(a) and 4(b), which depict the structural diagrams of the respective components of the releasing device in Fig. 3 after they are packaged according to the second embodiment of the present invention. Fig. 4(a) shows a schematic diagram of the releasing device containing a hard disk drive **18** therein after the components in Fig. 3 are packaged. While an external force is applied to the control component **28**, the external force is passing through the first releasing component **22** connected thereto and thus the first releasing component **22** slides along the opposite direction of the applied external force. Similarly, the second releasing component **24** receives the force passing from the first releasing component **22** so that the second front end **242** revolves around the pivoting center and the second back end **244** also revolves around the fixed point **246** in the opposite direction to the second front end **242**. The third front end **262** connected to the second back end **244** is also driven so that the protruding portions **266** of the third back end **264** move towards the direction of the hard disk drive **18**. Therefore, the hard disk drive **18** contained within the housing **20** is pushed out by the protruding portions **266** of the third releasing component **26**. Please refer to Fig. 4(b), which depicts another schematic diagram of the releasing device after the hard disk drive in Fig. 4(a) is released from the housing **20**. Therefore, the released hard disk drive **18** could be easily accessed.

As the mentioned, the present first releasing component could be a pushing bar or an arbitrary component capable of receiving an external force and is not limited to examples of the mentioned embodiments. Any kinds of structures comprising a first front end, a first back end and capable of receiving an external force and driving the elements connected thereto are not escaped from the definition of the first releasing component of the present invention.

The present second releasing component could be a revolving bar or a revolving element and is not limited to the examples of the mentioned embodiments. Any kinds of structures comprising a second front end, a second back end and a fixed point and capable of revolving around the fixed point to drive the elements connected thereto are not escaped from the definition of the second releasing component of the present invention.

The present third releasing component could be a pushing plate or a pushing element and is not limited to the examples of the mentioned embodiments. Any kinds of structures comprising a third front end and a third back end with a protruding portion and capable of releasing the hard disk drive therein are not escaped from the definition of the third releasing component of the present invention.

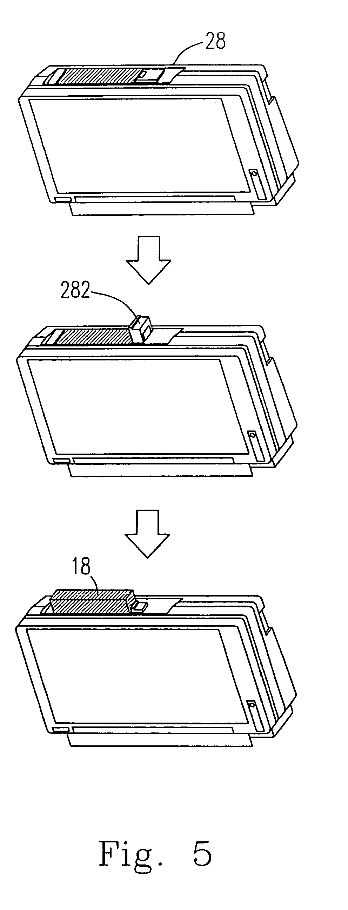

Please refer to Fig. 5, which depicts an appearance diagram of the releasing device for releasing the hard disk drive according to the present invention. At first, rotate the pivoting portion **282** about 90 degrees, then press the control component **28** and the hard disk drive **18** is released.

Through the assistance of the mentioned releasing device, users only press the control component so that the first releasing component moves to drive the rotation of the second releasing component, followed by driving the third releasing component to push out the hard disk drive from the housing. In such way, the portable hard disk drive for supporting the multi-media equipments in the automobiles could easily take to the home or office for a further use though the present releasing device for releasing the hard disk drive.

Furthermore, the present releasing device could be applied to any kinds of vehicles, such as a bus, an automobile, a train, a MRT and an airplane. The position that the releasing device mounted on the vehicle could be within the control table, the headrest and the seat back and under the seat.

In conclusion, the present invention provides a releasing device mounted on the vehicle for releasing the hard disk drive. Users could easily take the hard disk drive from the vehicle and bring to anywhere they want to use. Moreover, the present releasing device could reduce the users' worries that the expensive devices mounted on the vehicle might be stolen. Accordingly, the present invention can effectively solve the problems and drawbacks in the prior art, and thus it fits the demand of the industry and is industrially valuable.

## Claims

1. A releasing device for releasing a hard disk drive (18), comprising:
a housing (10, 20) for containing the hard disk drive (18) therein;
a first releasing component (12, 22) mounted on the housing (10, 20) and having a first front end (122, 222) and a first back end (124, 224);
a control component (28) connected to the first front end (122, 222) of the first releasing component (12, 22) for controlling whether an external force is to be applied to the first releasing component (12, 22);
a second releasing component (14, 24) having a second front end (142, 242), a second back end (144, 244) and a fixed point (146, 246) fixed to the housing (10, 20), wherein the second front end (142, 242) is connected to the first back end (122, 222) of the first releasing component (12, 22), the fixed point (146, 246) mounted between the second front end (142, 242) and the second back end (144, 244) for serving as a pivoting center, and the second front end (142, 242) revolves around the pivoting center while the first releasing component (12, 22) is moved; and
a third releasing component (16, 26) having a third front end (162, 262) and a third back end (164, 264), wherein the third front end (162, 262) is connected to the second back end (144, 244) of the second releasing component (14, 24), and the third back end (164, 264) of the third releasing component (16, 26) pushes the hard disk drive (18) for releasing the hard disk drive (18) from the housing (10, 20) while the second releasing component (14, 24) is pivoted.

2. A releasing device as claimed in Claim 1 **characterized in that** the housing (10, 20) has a lateral side (102, 202) and the first releasing component (12, 22) is mounted on the lateral side (102, 202) of the housing (10, 20).

3. A releasing device as claimed in Claim 1 **characterized in that** the control component (28) comprises a pivotable portion (282), the pivotable portion (282) in a first position enables the application of the external force to the first releasing component (12, 22) and the pivotable portion (282) in a second position disables the application of the external force to the first releasing component (12, 22).

4. A releasing device as claimed in Claim 1 **characterized in that** the housing (10, 20) has an opening (108, 208) on a side thereof.

5. A releasing device as claimed in Claim 4 **characterized in that** the third back end (164, 264) of the third releasing component (16, 26) comprises a protruding portion (166, 266) passing through the opening (108, 208).

6. A releasing device as claimed in Claim 1 **characterized in that** the first releasing component (12, 22) is a pushing bar.

7. A releasing device as claimed in Claim 1 **characterized in that** the control component (28) is a pressing button.

8. A releasing device as claimed in Claim 1 **characterized in that** the second releasing component (14, 24) is a revolving bar.

9. A releasing device as claimed in Claim 1 **characterized in that** the third releasing component (16, 26) is a pushing plate.

10. A releasing device as claimed in Claim 1 **characterized in that** the releasing device is configured in a vehicle.

11. A releasing device for releasing a hard disk drive (18), comprising:
a housing (10, 20) for containing the hard disk drive (18) therein;
a first releasing component (12, 22) mounted on the housing (10, 20);
a second releasing component (14, 24) having a first end (142, 242), a second end (144, 244) and a fixed point (146, 246), wherein the first end (142, 242) is connected to the first releasing component (12, 22), and the second releasing component (14, 24) moves around the fixed point (146, 246) in response to a movement of the first releasing component (12, 22); and
a third releasing component (16, 26) having a third end (162, 262) connected to the second end (144, 244) of the second releasing component (14, 24), wherein the third releasing component (16, 26) pushes the hard disk drive (18) for releasing the hard disk drive (18) from the housing (10, 20) while the second releasing component (14, 24) is moved.

12. A releasing device as claimed in Claim 11 **characterized in that** the third releasing component (16, 26) further comprises a fourth end (164, 264) to push the hard disk drive (18) while the second released component (14, 24) is moved for releasing the hard disk drive (18) from the housing (10, 20).

13. A releasing device as claimed in Claim 11 **characterized in that** the housing (10, 20) has a lateral side (102, 202) and the first releasing component (12, 22) is mounted on the lateral side (102, 202) of the housing (10, 20).

14. A releasing device as claimed in Claim 11 **characterized in that** the housing (10, 20) has an opening (108, 208) on a side thereof.

15. A releasing device as claimed in Claim 14 **characterized in that** the fourth end (164, 264) of the third releasing component (16, 26) comprises a protruding portion (166, 266) passing through the opening (108, 208).

16. A releasing device as claimed in Claim 11 **characterized in that** the first releasing component (12, 22) is a pushing bar.

17. A releasing device as claimed in Claim 11 **characterized in that** the second releasing component (14, 24) is a revolving bar.

18. A releasing device as claimed in Claim 11 **characterized in that** the third releasing component (16, 26) is a pushing plate.

19. A releasing device as claimed in Claim 11 **characterized in that** the releasing device is configured in a vehicle.
